# EUROPÄISCHE PATENTSCHRIFT

(11) **EP 2 354 539 B1**
(45) Veröffentlichungstag und Bekanntmachung des Hinweises auf die Patenterteilung: **23.05.2012**
(21) Anmeldenummer: 10000294.8
(22) Anmeldetag: 14.01.2010
(51) Int. Cl.: F03D 7/02, F03D 11/00

(54) **Windenergieanlage mit einem Azimutsystem sowie Verfahren zur Azimutverstellung einer Windenergieanlage**
Wind turbine with an azimuth system and method for adjusting the azimuth of a wind energy plant
Eolienne dotée d'un système d'azimute ainsi que procédé de fabrication d'azimut d'une éolienne

(43) Veröffentlichungstag der Anmeldung: 10.08.2011
(73) Patentinhaber: Nordex Energy GmbH, 22848 Norderstedt (DE)
(72) Erfinder: Behnke, Merten, 23974 Alt Farpen (DE); Sievers, André, 18230 Bastorf (DE)
(74) Vertreter: Hauck Patent- und Rechtsanwälte

(56) Entgegenhaltungen:
- EP-A2- 1 650 431
- DE-A1-102008 004 712
- DE-C1- 10 023 440
- DE-U1- 20 314 822

## Beschreibung

Die vorliegende Erfindung betrifft eine Windenergieanlage mit einem Azimutsystem sowie ein Verfahren zur Verstellung der Azimutausrichtung der Windenergieanlage.

Um den Ertrag einer Windenergieanlage zu maximieren und die Lasten auf die Windenergieanlage zu reduzieren, wird ein mit einer Gondel verbundener Rotor der Windenergieanlage ständig nach der Windrichtung ausgerichtet. Die Windenergieanlage besteht üblicherweise aus einem Turm und einer drehbar auf dem Turmkopf gelagerten Gondel. Die Gondel trägt den Rotor mit mindestens einem Rotorblatt sowie einen Generator, der das von dem Rotor aus dem Wind aufgenommene Drehmoment in elektrische Leistung umwandelt.

Für die Windrichtungsnachführung der Gondel ist es bekannt, bei Windenergieanlagen ein motorisch angetriebenes Azimutsystem einzusetzen. Das Azimutsystem ist dabei in der Regel zwischen einem Turmkopf und der Gondel angeordnet, wobei sich die Komponenten des Azimutsystems sowohl in der Gondel als auch im Turm befinden können. Das Azimutsystem verfügt über mindestens einen Stellantrieb, der mit einem Getriebe ausgestattet sein kann und ein Azimutlager, dessen Innenring oder Außenring eine Verzahnung aufweist oder mit einem Zahnkranz verbunden ist. Ferner ist das Azimutsystem mit mindestens einer Bremseinheit ausgestattet, die üblicherweise eine oder mehrere mit der oder den Bremsscheiben zusammenwirkende Bremszangen aufweist. Die Bremszangen tragen jeweils Bremsbeläge, die bei angezogener Bremszange an der Bremsscheibe anliegen. Ein mit dem Stellantrieb verbundenes Ritzel greift zur Azimutverstellung der Gondel in die Verzahnung ein und ermöglicht so die Drehung der Gondel auf dem Turmkopf. Üblicherweise ist dabei der Stellantrieb an der Gondel befestigt, während die Verzahnung turmfest ausgeführt ist. Nach erfolgter Azimutverstellung der Gondel wird die Gondel durch die Bremseinheiten festgesetzt. Diese erzeugen das für die Gondel notwendige Haltemoment. Das Haltemoment ist dabei so groß gewählt, dass die an dem Rotor angreifenden Windkräfte die Azimutausrichtung der Gondel nicht verändern können.

Um während der Azimutausrichtung der Gondel ein durch den Rotor und etwaige Turbulenzen des Windes angeregtes Schwingen der Gondel zu vermeiden, wird die Bewegung der Gondel während der Azimutausrichtung gedämpft. Es ist bekannt, dazu über die Bremseinheiten auch während der Azimutausrichtung ein Resthaltemoment auf die Bremsscheiben auszuüben.

Aus DE 100 23 440 C1 ist es bekannt, während der Azimutausrichtung der Gondel nur eine oder zwei Bremseinheiten des Azimutsystems im Eingriff zu belassen, um die erforderliche Dämpfung des Stellvorgangs zu gewährleisten. Der Stellantrieb ist dabei derart ausgelegt, dass die Gondel gegen das aufgebrachte Resthaltemoment nachgeführt werden kann. Durch das Resthaltemoment der Bremsen und die geringe Umfangsgeschwindigkeit bei der Azimutverstellung kommt es zwischen den Bremszangen und der Bremsscheibe zu einem sogenannten Haftgleiteffekt. Der Haftgleiteffekt tritt beim Übergang von Haftreibung zur Gleitreibung und umgekehrt auf. Die durch den Haftgleiteffekt auftretenden Schwingungen an dem Turm und der Gondel führen zu deren mechanischen Belastung. Darüber hinaus ist das Auftreten des Haftgleiteffekts mit der Entstehung von Lärm verbunden. Mitunter kann der durch den Haftgleiteffekt abgestrahlte Schall oberhalb von gesetzlich zulässigen Werten liegen, so dass die Windenergieanlage abgeschaltet werden muss.

Der Erfindung liegt die Aufgabe zugrunde, eine Windenergieanlage mit einem Azimutsystem und einem Verfahren zur Azimutausrichtung der Gondel bereitzustellen, die mit technisch einfachen Mitteln das Auftreten des Haftgleiteffekts und die damit verbundenen Schwingungen und Schallemissionen zuverlässig vermeiden.

Erfindungsgemäß wird die Aufgabe durch eine Windenergieanlage mit den Merkmalen des Anspruchs 1 gelöst.

Die erfindungsgemäße Windenergieanlage besitzt einen Turm und eine drehbar auf dem Turm gelagerte Gondel, deren Ausrichtung durch ein Azimutsystem einstellbar ist. Das Azimutsystem besitzt mindestens einen Antrieb, ein drehbares Azimutlager, eine Azimutbremsscheibe sowie mindestens zwei Bremseinheiten, die ein Halte- und/oder Bremsmoment auf die Bremsscheibe ausüben können. Mindestens eine der Bremseinheiten besitzt einen ersten Bremsbelag mit einem ersten Reibungsbeiwert. Erfindungsgemäß ist ferner mindestens eine der anderen Bremseinheiten mit einem zweiten Bremsbelag ausgestattet, der einen zweiten Reibungsbeiwert besitzt. Erfindungsgemäß besitzen der erste und der zweite Bremsbelag jeweils unterschiedliche Reibungsbeiwerte. Durch Bremseinheiten, die unterschiedliche Reibungsbeiwerte besitzen, ist es möglich, das während des Verstellens der Gondel erforderliche Bremsmoment durch eine oder mehrere Bremseinheiten zu erbringen, deren Bremsbelag einen Reibungsbeiwert besitzt, bei dem der Haftgleiteffekt nicht auftritt. Auf diese Weise kann die Geräuschbildung beim Verstellen der Azimutausrichtung der Gondel vermieden werden. Auch Erschütterungen, die mit dem Haftgleiteffekt auftreten, können durch die Verwendung von zwei unterschiedlichen Bremsbelägen in dem Azimutsystem vermieden werden.

In einer bevorzugten Ausgestaltung ist der Reibungsbeiwert des ersten Bremsbelags kleiner als der Reibungsbeiwert des zweiten Bremsbelags. Der zweite Bremsbelag ermöglicht aufgrund seiner Haftreibung zwischen dem Bremsbelag und der Bremsscheibe das Halten der Gondel in einer vorbestimmten Position. Der erste Bremsbelag wird so ausgelegt, dass zwischen Bremsbelag und Bremsscheibe eine Gleitreibung auftritt. Der Reibungsbeiwert des ersten Bremsbelags ist aber groß genug, um eine Dämpfung der Verstellbewegung zu gewährleisten.

In einer bevorzugten Ausgestaltung können die Bremseinheiten mit dem ersten Bremsbelag unabhängig von den Bremseinheiten mit dem zweiten Bremsbelag angesteuert werden. Die unabhängige Ansteuerung von Bremseinheiten in dem Azimutsystem erlaubt es, die Bremseinheiten mit dem ersten Bremsbelag mit einem Bremsdruck derart zu beaufschlagen, dass während der Verstellung der Azimutausrichtung die Bewegung der Gondel gedämpft wird, aber der Haftgleiteffekt vermieden werden kann. Der Bremsdruck zur Vermeidung des Haftgleiteffekts hängt dabei von dem ersten Reibungsbeiwert ab. Die Bremseinheiten mit dem zweiten Bremsbelag können wahlweise mit Druck beaufschlagt oder drucklos geschaltet werden.

In einer bevorzugten Ausgestaltung sind die Bremseinheiten ringförmig um eine an einem inneren oder äußeren Lagerring des Azimutlagers befestigte Bremsscheibe angeordnet. Bevorzugt werden Bremseinheiten verwendet, die hydraulisch betätigt werden. Alternativ kann die Bremsscheibe auch am Turm oder dem Maschinenträger befestigt sein.

In einer bevorzugten Ausgestaltung sind die Bremseinheiten mit dem ersten Bremsbelag mit mindestens zwei verschiedenen Bremsdrücken beaufschlagbar. Auf diese Weise können die Bremseinheiten mit dem ersten Bremsbelag eingesetzt werden, um das Haltemoment beim Feststellen der Gondel zu verstärken oder das Bremsmoment während des Verstellvorgangs der Gondel auszubringen.

Die erfindungsgemäße Aufgabe wird ebenfalls durch ein Verfahren mit den Merkmalen aus Anspruch 7 gelöst.

Das erfindungsgemäße Verfahren dient zur Azimutverstellung an einer Windenergieanläge, die ein Azimutsystem mit mindestens einem Stellantrieb, einem drehbaren Azimutlager, mindestens einer Bremsscheibe und mindestens zwei Bremseinheiten aufweist. Von den mindestens zwei Bremseinheiten ist mindestens eine der Bremseinheiten mit einem ersten Bremsbelag mit einem ersten Reibungsbeiwert und mindestens eine der Bremseinheiten mit einem zweiten Bremsbelag mit einem zweiten Reibungsbeiwert ausgestattet. Erfindungsgemäß ist der erste Reibungsbeiwert kleiner als der zweite Reibungsbeiwert. Bei dem erfindungsgemäßen Verfahren erfolgt ein Aufbauen eines ersten Bremsdrucks an der mindestens einen Bremseinheit mit dem ersten Bremsbelag. Ferner erfolgt ein Lösen der mindestens einen Bremseinheit, die mit dem zweiten Bremsbelag ausgestattet ist. Das erfindungsgemäße Verfahren sieht ferner eine Betätigung des Azimutantriebs zur Verstellung der Azimutausrichtung gegen den von der mindestens einen Bremseinheit mit dem ersten Bremsbelag aufgebauten Bremsdruck vor. Um nach erfolgter Azimutausrichtung die Gondel in ihrer vorbestimmten Position zu halten, erfolgt abschließend das Aufbauen eines zweiten Bremsdrucks mit der mindestens einen Bremseinheit mit dem zweiten Bremsbelag. Bei dem erfindungsgemäßen Verfahren wird von den Bremseinheiten, die einen Bremsbelag mit einem geringeren Reibungsbeiwert besitzen, ein auf den Bremsbelag abgestimmtes Bremsmoment aufgebaut, so dass während des Verstellvorgangs das Auftreten des Haftgleiteffekts vermieden wird.

In einer bevorzugten Ausgestaltung des erfindungsgemäßen Verfahrens wird abschließend der Bremsdruck der Bremseinheiten mit dem zweiten Bremsbelag auch an den Bremseinheiten aufgebaut, die mit dem ersten Bremsbelag ausgestattet sind.

Auf diese Weise tragen auch diese Bremseinheiten dazu bei, die verstellte Azimutausrichtung der Gondel zu halten.

In einer bevorzugten Ausführung des erfindungsgemäßen Verfahrens ist der erste Bremsdruck, der auf die Bremseinheiten mit dem ersten Bremsbelag zur Dämpfung der Verstellbewegung aufgebracht wird, unterschiedlich zu dem Bremsdruck, der nach Abschluss des Verstellvorgangs für das Feststellen der Gondel aufgebracht wird, wobei bevorzugt der erste Bremsdruck kleiner als der zweite Bremsdruck ist.

In einer bevorzugten Ausgestaltung ist der erste Bremsdruck, der auf die Bremseinheiten mit dem ersten Bremsbelag zur Dämpfung der Verstellbewegung aufgebracht wird, gleich dem Bremsdruck der auf die Bremseinheiten mit dem zweiten Bremsbelag zum Feststellen der Gondel aufgebracht wird. In diesem Fall muss der erste Bremsbelag einen Reibungsbeiwert besitzen, der bei anliegendem Bremsdruck zur Aufbringung des Haltemoments eine Dämpfung der Verstellbewegung ohne Haftgleiteffekt ermöglicht. In dem Fall, das nur ein Wert für den Bremsdruck vorliegt, werden die Bremseinheiten mit dem ersten Bremsbelag ständig mit diesem Bremsdruck beaufschlagt, während der Bremsdruck auf den Bremseinheiten mit dem zweiten Bremsbelag wahlweise auf den Wert oder auf Null geschaltet wird.

Ein Ausführungsbeispiel der Erfindung wird nachfolgend anhand von Zeichnungen näher erläutert. Es zeigen:
- Fig. 1: eine Schnittdarstellung eines Azimutsystems einer Windenergieanlage,
- Fig. 2: eine schematische Darstellung eines Azimutsystems an einer Wind- energieanlage und
- Fig. 3: eine schematische Darstellung eines Hydrauliksystems zur Steuerung der Bremseinheiten des Azimutsystems.

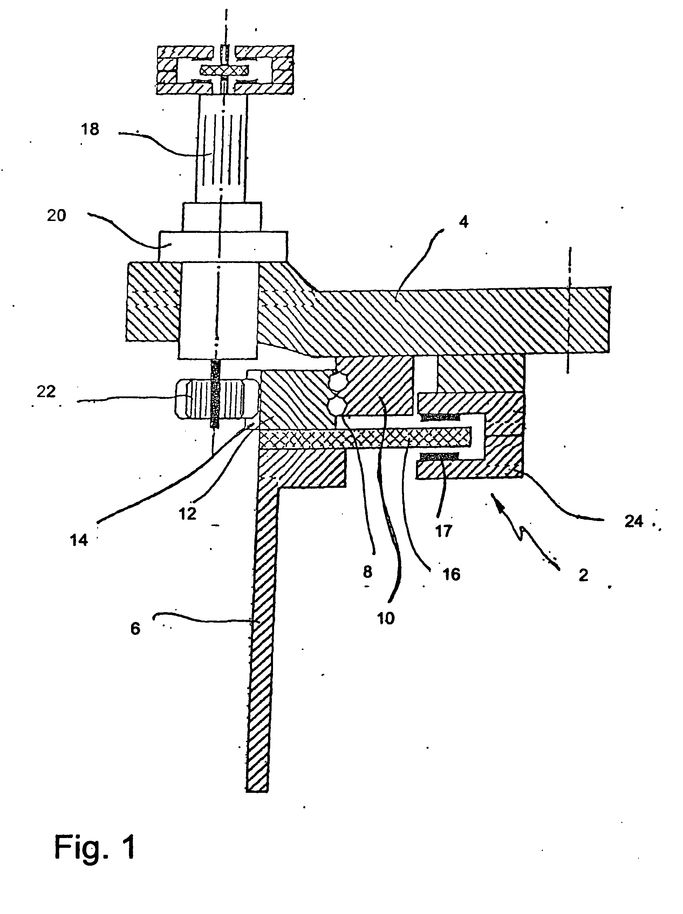

Fig. 1 zeigt eine Schnittdarstellung eines erfindungsgemäßen Azimutsystems 2 einer Windenergieanlage. Das Azimutsystem ist an einem ausschnittsweise gezeigten Maschinenträger 4 einer nicht dargestellten Gondel montiert. Es dient zum Drehen der Gondel relativ zu dem ausschnittsweise dargestellten Turm 6 der Windenergieanlage. Die Drehung erfolgt hierbei im Wesentlichen um die Längsachse des Turms. Der Innenring 10 der Azimutdrehverbindung 8 ist fest mit dem Maschinenträger 4 verbunden. Der korrespondierende Außenring 12 ist mit einer Verzahnung 14 versehen und fest mit dem Turm 6 verbunden. Zwischen Außenring 12 und Turm 6 ist eine Bremsscheibe 16 angeordnet.

Ein Verstellantrieb 18 treibt über ein Getriebe 20 ein Ritzel 22 an, das mit der Verzahnung 14 kämmt. Durch Betätigung des Verstellantriebs 18 wird der Maschinenträger 4 mit der Gondel um die Längsachse des Turms gedreht.

Der Maschinenträger 4 ist ferner mit einer schematisch dargestellten Bremseinheit mit Bremszangen 24 versehen, die die Bremsscheibe 16 umgreifen.

Die Bremszangen 24 werden in dem dargestellten Ausführungsbeispiel hydraulisch über eine zentrale Hydraulikeinheit betätigt, die gondelseitig auf dem Maschinenträger 4 angeordnet ist. Nach erfolgter Windrichtungsnachführung wird die Gondel in der vorbestimmten Ausrichtung festgesetzt, indem die mit dem Maschinenträger 4 verbundenen Bremszangen 24 mit der am Turm befestigten Bremsscheibe 16 in Eingriff kommen. Dabei wird ein Druck auf die Bremszangen gegeben, der ein Haltemoment erzeugt. Die Bremsbeläge 17 sind jeweils an den Bremszangen 24 angebracht.

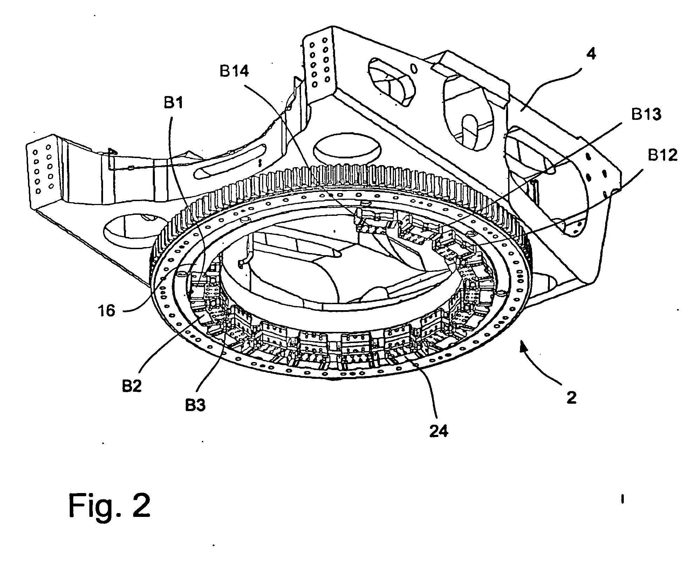

Die schematische Darstellung in Fig. 2 zeigt das an dem Maschinenträger 4 montierte Azimutsystem der Windenergieanlage in einer perspektivischen Ansicht. In dem dargestellten Beispiel sind vierzehn Bremseinheiten B1 bis B14 vorgesehen, die mit der ringförmigen Bremsscheibe 16 zusammenwirken.

Die in Fig. 2 dargestellten Bremseinheiten B1 bis B14 besitzen unterschiedliche Bremsbeläge. Die Bremseinheiten B1 und B14 sind mit Gleitbelägen ausgestattet. Der Gleitbelag ermöglicht bei Aufbringung eines auf den Belag abgestimmten Bremsmomentes eine Gleitreibung zwischen dem Bremsbelag und der Bremsscheibe während des Verstellvorganges. Ein Gleitbelag besitzt beispielsweise durch Zusatz von Graphit einen geringeren Reibungsbeiwert als ein Bremsbelag, der zum Halten des Azimutsystems eingesetzt wird. Der geringere Reibungsbeiwert des Gleitbelags ist so gewählt, dass eine Dämpfung der Azimutverstellung gewährleistet ist, wobei durch das geringere Losbrechmoment des Gleitbelags ein Haftgleiteffekt während des Verstellvorgangs vermieden wird.

Die weiteren Bremseinheiten B2 bis B13 sind mit einem Haltebelag als Bremsbelag ausgestattet. Der Belag besitzt gegenüber dem Gleitbelag einen größeren Reibungsbeiwert und erzeugt das für das Feststellen der Gondel notwendige Haltemoment.

Zum Festsetzen der Gondel werden die Bremseinheiten B 1 bis B 14 mit einem Haltedruck p_{H} beaufschlagt, der das erforderliche Haltemoment erzeugt. Soll die Gondel dem Wind nachgeführt werden, können die Bremseinheiten B2 bis B13 drucklos geschaltet werden. Gleichzeitig werden die Bremszangen B1 und B14 mit einem Bremsdruck p_{B} beaufschlagt, der im dargestellten Ausführungsbeispiel geringer als der Haltedruck p_{H} ist und das auf den Gleitbelag abgestimmte Bremsmoment erzeugt. Dieses Bremsmoment gestattet ein definiertes Gleiten der mit Gleitbelägen versehenen Bremszangen auf der Bremsscheibe. Der Bremsdruck p_{B} ist so eingestellt, dass das Bremsmoment ausreicht, um eine Dämpfung für Bewegung der Gondel sicherzustellen. Andererseits vermeidet der Gleitbelag aufgrund seines geringeren Losbrechmoments die Geräuschentwicklung durch den Haftgleiteffekt, der gelegentlich auch als Stick-Slip-Effekt bezeichnet wird.

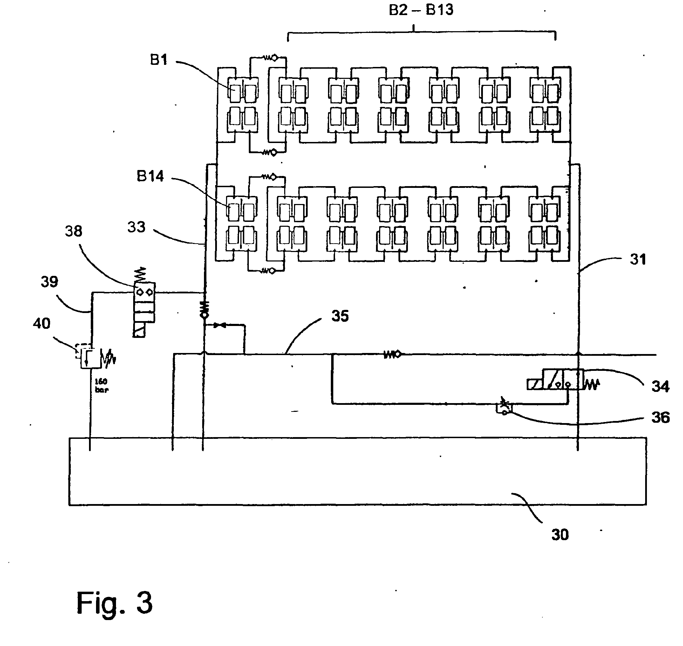

Fig. 3 zeigt eine schematische Darstellung eines Hydrauliksystems zur Ansteuerung der Bremseinheiten des Azimutsystems. Eine zentrale Hydraulikeinheit 30 stellt über die Druckleitungen 31 und 33 ein Hydraulikmedium für die Bremszangen der Bremseinheiten B 1 bis B 14 zur Verfügung. Zum Festsetzen der Gondel werden alle Bremszangen der Bremseinheiten B1 bis B14 mit einem Haltedruck p_{H} beaufschlagt. Der Druckaufbau erfolgt über Druckleitungen 31 und 33, wobei die Bremszangen der Bremseinheiten B2 bis B13 ausschließlich über die Druckleitung 31 versorgt werden.

Während der Azimutausrichtung der Gondel werden die Bremszangen B2 bis B13 drucklos geschaltet über ein 3/2-Wege-Ventil 34. Das 3/2-Wege-Ventil 34 wird hierzu gesperrt, so dass das Hydraulikmedium über die Leitung 31, ein Drosselrückschlagventil 36 und die Leitung 35 abfließt. Für die Bremszangen B1 und B14 wird der Hydraulikdruck auf den Bremsdruck p_{B} reduziert. Dazu wird der Zulauf aus der zentralen Hydraulikeinheit 30 unterbrochen und das 2/2-Wege-Ventil 38 geöffnet. Das Hydraulikmedium fließt von den Bremseinheiten B1 und B14 über die Leitungen 39 und 33 ab, wobei ein Stromregelventil 40 den Druck auf den Bremsdruck p_{B} begrenzt.

### Bezugszeichenliste

- 2: Azimutsystem
- 4: Maschinenträger
- 6: Turm
- 8: Azimutdrehverbindung
- 10: Innenring
- 12: Außenring
- 14: Verzahnung
- 16: Bremsscheibe
- 18: Stellantrieb
- 20: Getriebe
- 22: Ritzel
- 24: Bremszangen
- 30: Zentrale Hydraulikeinheit
- 31: Druckleitung
- 33: Druckleitung
- 34: 3/2-Wegeventil
- 35: Leitung
- 36: Drosselrückschlagventil
- 38: 2/2-Wegeventil
- 39: Leitung
- 40: Stromregelventil
- B1-B14: Bremszangen B1-B14

## Patentansprüche

1. Windenergieanlage mit einem Turm und einer drehbar auf dem Turm gelagerten Gondel, deren Ausrichtung über ein Azimutsystem (2) einstellbar ist, wobei das Azimutsystem mindestens einen Stellantrieb (18), ein drehbares Azimutlager (10, 12), mindestens eine Bremsscheibe (16) sowie mindestens zwei Bremseinheiten (B1 bis B14) aufweist, die ein Bremsmoment auf die Bremsscheibe ausüben können, **dadurch gekennzeichnet, dass** mindestens eine der Bremseinheiten (B1, B14) einen ersten Bremsbelag (17) mit einem ersten Reibungsbeiwert besitzt und mindestens eine der Bremseinheiten (B2 bis B13) einen zweiten Bremsbelag (17) mit einem zweiten Reibungsbeiwert besitzt, wobei der erste und zweite Reibungsbeiwert voneinander verschieden sind.

2. Windenergieanlage nach Anspruch 1, **dadurch gekennzeichnet, dass** der erste Reibungsbeiwert kleiner als der zweite Reibungsbeiwert ist.

3. Windenergieanlage nach Anspruch 1 oder 2, **dadurch gekennzeichnet, dass** die mindestens eine Bremseinheit (B1, B14) mit dem ersten Bremsbelag unabhängig von mindestens einer Bremseinheit (B2 - B 13) mit dem zweiten Bremsbelag angesteuert werden kann.

4. Windenergieanlage nach einem der Ansprüche 1 bis 3, **dadurch gekennzeichnet, dass** die Bremseinheiten (B1 - B14) ringförmig um eine an einem inneren oder äußeren Lagerring (10, 12) des Azimutlagers befestigte Bremsscheibe angeordnet sind.

5. Windenergieanlage nach einem der Ansprüche 1 bis 4, **dadurch gekennzeichnet, dass** die Bremseinheiten (B1 - B14) hydraulisch betätigt werden.

6. Windenergieanlage nach einem der Ansprüche 1 bis 5, **dadurch gekennzeichnet, dass** die mindestens eine Bremseinheit (B1, B 14) mit einem ersten Bremsbelag mit mindestens zwei verschiedenen Bremsdrücken beaufschlagt werden kann.

7. Verfahren zur Azimutverstellung bei einer Windenergieanlage, die ein Azimutsystem mit mindestens einem Stellantrieb (18), einem drehbaren Azimutlager (10, 12), mindestens einer Bremsscheibe (16) und mindestens zwei Bremseinheiten (B1 - B 14) aufweist, von denen mindestens eine Bremseinheit einen ersten Bremsbelag mit einem ersten Reibungsbeiwert und mindestens eine der Bremseinheiten einen zweiten Bremsbelag mit einem zweiten Reibungsbeiwert aufweist, wobei der erste Reibungsbeiwert kleiner als der zweite Reibungsbeiwert ist, mit folgenden Verfahrensschritten:
- Aufbau eines ersten Bremsdrucks an der mindestens einen Bremseinheit (B1, B 14) mit dem ersten Bremsbelag,
- Lösen der mindestens einen Bremseinheit (B2 - B13) mit dem zweiten Bremsbelag,
- Betätigen des Stellantriebs zur Verstellung der Azimutausrichtung gegen den von der mindestens einen Bremseinheit mit dem ersten Bremsbelag aufgebrachten Bremsdruck und
- Aufbauen eines zweiten Bremsdrucks an der mindestens einen Bremseinheit mit dem zweiten Bremsbelag, um die verstellte Azimutausrichtung zu halten.

8. Verfahren nach Anspruch 7 oder 8, **dadurch gekennzeichnet, dass** der zweite Bremsdruck auch an der mindestens einen Bremseinheit mit einem ersten Bremsbelag aufgebaut wird, um die verstellte Azimutausrichtung zu halten.

9. Verfahren nach Anspruch 7, **dadurch gekennzeichnet, dass** der erste Bremsdruck von dem zweiten Bremsdruck verschieden ist.

10. Verfahren nach Anspruch 7, **dadurch gekennzeichnet, dass** der erste Bremsdruck gleich dem zweiten Bremsdruck ist.

## Claims

1. A wind turbine with a tower and a nacelle rotatably mounted on the tower, the alignment of which is adjustable via an azimuth system (2), wherein the azimuth system has at least one servo drive (18), a rotatable azimuth bearing (10,12), at least one brake disk (16) and at least two brake units (B1 through B14), which can exert a brake torque on the brake disk, **characterized in that** at least one of the brake units (B1, B14) has a first brake pad (17) with a first friction coefficient and at least one of the brake units (B2 through B13) has a second brake pad (17) with a second friction coefficient, wherein the first and second friction coefficients are different.

2. The wind turbine according to claim 1, **characterized in that** the first friction coefficient is smaller than the second friction coefficient.

3. The wind turbine according to claim 1 or 2, **characterized in that** the at least one brake unit (B1, B14) with the first brake pad can be driven independently of at least one brake unit (B2 - B13) with the second brake pad.

4. The wind turbine according to one of claims 1 through 3, **characterized in that** the brake units (B1- B14) are arranged annularly around a brake disk fastened on an inner or outer bearing ring (10, 12) of the azimuth bearing.

5. The wind turbine according to one of claims 1 through 4, **characterized in that** the brake units (B1- B14) are hydraulically actuated.

6. The wind turbine according to one of claims 1 through 5, **characterized in that** the at least one brake unit (B1, B14) with a first brake pad can be supplied with at least two different brake pressures.

7. A method for adjusting the azimuth of a wind turbine, which has an azimuth system with at least one servo drive (18), a rotatable azimuth bearing (10, 12), at least one brake disk (16) and at least two brake units (B1 - B14), of which at least one brake unit has a first brake pad with a first friction coefficient and at least one of the brake units has a second brake pad with a second friction coefficient, wherein the first friction coefficient is smaller than the second friction coefficient, with the following process steps:
- Buildup of a first brake pressure on the at least one brake unit (B1, B14) with the first brake pad,
- Release of the at least one brake unit (B2 - B13) with the second brake pad,
- Actuation of the servo drive for adjustment of the azimuth alignment against the brake pressure applied by the at least one brake unit with the first brake pad and
- Buildup of a second brake pressure on the at least one brake unit with the second brake pad, in order to hold the adjusted azimuth alignment.

8. The method according to claim 7 or 8, **characterized in that** the second brake pressure is also built up on the at least one brake unit with a first brake pad, in order to hold the adjusted azimuth alignment.

9. The method according to claim 7, **characterized in that** the first brake pressure is different from the second brake pressure.

10. The method according to claim 7, **characterized in that** the first brake pressure is equal to the second brake pressure.

## Revendications

1. Eolienne dotée d'une tour et d'une nacelle logée rotative sur la tour dont l'orientation est ajustable par un système d'azimut (2), le système d'azimut comprenant au moins un mécanisme de commande (18), un palier azimutal rotatif (10, 12), au moins un disque de frein (16) ainsi qu'au moins deux unités de freinage (B1 à B14), qui peuvent exercer un couple de freinage sur le disque de frein, **caractérisé en ce qu'**au moins une des unités de freinage (B1, B14) possède une première garniture de frein (17) présentant un premier coefficient de frottement et au moins une des unités de freinage (B2 à B13) possède une seconde garniture de frein (17) présentant un second coefficient de frottement, les premier et second coefficients de frottement étant différents l'un de l'autre.

2. Eolienne selon la revendication 1, **caractérisée en ce que** le premier coefficient de frottement est inférieur au second coefficient de frottement.

3. Eolienne selon la revendication 1 ou 2, **caractérisée en ce que** ladite au moins une unité de freinage (B1, B14) comportant la première garniture de frein peut être commandée indépendamment d'au moins une unité de freinage (B2 - B13) comportant la seconde garniture de frein.

4. Eolienne selon une des revendications 1 à 3, **caractérisée en ce que** les unités de freinage (B1 - B14) sont agencées circulairement autour d'un disque de frein fixé sur une bague de roulement (10, 12) interne ou externe du palier azimutal.

5. Eolienne selon une des revendications 1 à 4, **caractérisée en ce que** les unités de freinage (B1-B14) sont actionnées hydrauliquement.

6. Eolienne selon une des revendications 1 à 5, **caractérisée en ce que** ladite au moins une unité de freinage (B1, B14) comportant une première garniture de frein peut être soumise à au moins deux pressions de freinage différentes.

7. Procédé de réglage d'azimut sur une éolienne dotée d'un système d'azimut comprenant au moins un mécanisme de commande (18), un palier azimutal rotatif (10, 12), au moins un disque de frein (16) et au moins deux unités de freinage (B1 à B14), dont au moins une unité de freinage possède une première garniture de frein présentant un premier coefficient de frottement et au moins une des unités de freinage possède une seconde garniture de frein présentant un second coefficient de frottement, le premier coefficient de frottement étant inférieur au second coefficient de frottement, incluant les étapes de procédé suivantes :
- application d'une première pression de freinage sur ladite au moins une unité de freinage (B1, B14) comportant la première garniture de frein,
- libération de ladite au moins une unité de freinage (B2 - B13) comportant la seconde garniture de frein,
- actionnement du mécanisme de commande pour mettre au point l'orientation azimutale contre la pression de freinage qui est appliquée par la au moins une unité de freinage comportant la première garniture de frein et
- application d'une seconde pression de freinage sur ladite au moins une unité de freinage comportant la seconde garniture de frein, afin de maintenir l'orientation azimutale réglée.

8. Procédé selon la revendication 7 ou 8, **caractérisé en ce que** la seconde pression de freinage est également appliquée sur ladite au moins une unité de freinage comportant une première garniture de frein, afin de maintenir l'orientation azimutale réglée.

9. Procédé selon la revendication 7, **caractérisé en ce que** la première pression de freinage est différente de la seconde pression de freinage.

10. Procédé selon la revendication 7, **caractérisé en ce que** la première pression de freinage est identique à la seconde pression de freinage.
